Europäisches Patentamt

European Patent Office

Office européen des brevets

(11) Veröffentlichungsnummer: **0 330 903**
**A2**

# (12) EUROPÄISCHE PATENTANMELDUNG

(21) Anmeldenummer: 89102533.0

(22) Anmeldetag: 15.02.89

(51) Int. Cl.⁴: **F16N 3/04 , F16N 35/00**

(30) Priorität: 29.02.88 DE 8802650 U
26.10.88 DE 8813422 U

(43) Veröffentlichungstag der Anmeldung:
06.09.89 Patentblatt 89/36

(84) Benannte Vertragsstaaten:
AT BE CH DE ES FR GB GR IT LI LU NL SE

(71) Anmelder: DEUTSCHE CASTROL
VERTRIEBSGESELLSCHAFT mbH
Esplanade39
D-2000 Hamburg 36(DE)

(72) Erfinder: Bosse, Gerhard R.
Waldweg 11
D-2000 Oststeinbeck 2(DE)
Erfinder: Lienow, Michael
Jahnstrasse 64
D-2085 Quickborn(DE)
Erfinder: Spiegel, Bernt, Prof. Dr.
Saarburger Ring 10 - 12
D-6800 Mannheim(DE)
Erfinder: Kruse, Bernd O., Dr.
Ludwigsteinstrasse 63
D-3430 Witzenhausen 6(DE)

(74) Vertreter: Jochem, Bernd, Dipl.-Wirtsch.-Ing.
Staufenstrasse 36 Postfach 17 41 09
D-6000 Frankfurt/Main(DE)

(54) Ölkännchen mit Wandhalter.

(57) Ein an einem Wandhalter in einer bestimmten Tragstellung befestigbares Ölkännchen (10) hat einen elastisch biegsamen Rüssel (24, 28). An dem Wandhalter (16) ist an derjenigen Stelle (bei 38), wo sich in der Tragstellung des Ölkännchens (10) die Rüsselspitze (24) befindet, fest oder lösbar geklemmt eine Verschlußkappe (64) angebracht. In der Tragstellung verschließt die Verschlußkappe (64) die Öffnung in der Rüsselspitze (24) des Ölkännchens (10). Beim Abnehmen des Ölkännchens (10) vom Wandhalter (16) kann die Verschlußkappe an diesem verbleiben.

FIG. 6

## ÖLKÄNNCHEN MIT WANDHALTER

Die Erfindung betrifft ein an einem Wandhalter in einer bestimmten Tragstellung befestigbares Ölkännchen mit einem elastisch biegsamen Rüssel.

Bisher werden Ölkännchen normalerweise auf einem Regal oder in einem Schubfach abgelegt. Damit kein Öl ausläuft, ist eine Verschlußkppe auf der Rüsselöffnung vorgesehen, die leicht verloren geht oder, wenn sie unverlierbar über ein Band mit dem Ölkännchen verbunden ist, die Handhabung behindert. Außerdem beschmutzt man sich daran die Finger. Nicht nur dann, wenn keine Verschlußkappe vorhanden ist, sondern selbst mit Verschlußkappe wird man Ölkännchen vorsorglich so zu stellen oder legen versuchen, daß die Rüsselspitze nach oben weist, damit kein Öl auslaufen kann. Dabei muß jedoch meistens eine Halterung improvisiert werden, die das Ölkännchen in der gewünschten aufrechten Stellung hält.

Der Erfindung liegt die Aufgabe zugrunde, eine zueinander passende Kombination aus Ölkännchen und Wandhalter zu schaffen, welche die Handhabung des Ölkännchens erleichtert und auf einfache Weise dafür sorgt, daß im abgelegten Zustand kein Öl ausläuft.

Vorstehende Aufgabe wird erfindungsgemäß dadurch gelöst, daß am Wandhalter an derjenigen Stelle, wo sich in der Tragstellung des Ölkännchens die Rüsselspitze befindet, eine Verschlußkappe ange bracht ist, welche die Rüsselspitze des Ölkännchens verschließt, und aus welcher die Rüsselspitze beim Abnehmen des Ölkännchens vom Wandhalter herausziehbar ist.

Durch die Erfindung wird erreicht, daß das Verschließen des Ölkännchens zum Nebeneffekt seines Abstellens wird. Da die Öffnung an der Rüsselspitze schon durch die zur Anbringung des Ölkännchens am Wandhalter erforderliche Handbewegung geschlossen wird, vereinfacht sich die Handhabung, und es gibt keine schmutzigen Finger mehr.

Dieser Vorteil wird bereits bei einer einfachen Ausführungsform der Erfindung erzielt, bei welcher die Verschlußkappe durch ein Sackloch im Wandhalter gebildet, also unlösbar fest mit diesem verbunden ist. Andererseits hat sich aber gezeigt, daß man in der Praxis in vielen Fällen doch nicht ohne Verschlußkappe auskommt. Ein Ölkännchen muß, nachdem es vom Wandhalter abgenommen worden ist, oft längere Zeit an verschiedenen Stellen gebraucht, dazwischen transportiert und abgesetzt oder abgelegt werden und darf auch während des Transports und im liegenden Zustand kein 1 verlieren. Um dies unter Beibehaltung der obigen grundsätzlichen Vorteile zu erreichen, wird in bevorzugter Ausführung der Erfindung vorgeschlagen, daß der Wandhalter an derjenigen Stelle, wo sich in der Tragstellung des Ölkännchens die Rüsselspitze befindet, eine Klemme aufweist, welche eine auf die Rüsselspitze aufsetzbare Verschlußkappe kraftschlüssig, aber lösbar hält.

Wenn bei dieser bevorzugten Ausführung das Ölkännchen nur kurzzeitig vom Wandhalter abgenommen wird, kann die Verschlußkappe weiter am Wandhalter festgeklemmt bleiben. Nach Gebrauch kann das Ölkännchen einfach wieder am Wandhalter angebracht und dabei gleichzeitig die Rüsselspitze in die geklemmt gehaltene Verschlußkappe eingeführt werden. Man hat in diesem Fall die oben erwähnte einfache Handhabung. Vorteilhaft ist vor allem, daß man sich nicht die Hände schmutzig machen muß, um die Verschlußkappe abzunehmen und wieder aufzusetzen. Sie kann bei diesen kurzzeitigen Einsätzen des Ölkännchens auch nicht verloren gehen, weil sie am Wandhalter verbleibt.

Soll dagegen das Ölkännchen für eine längere Zeit des Gebrauchs und eventuelle Transporte vom Wandhalter abgenommen werden, so kann dabei gleichzeitig auch die Verschlußkappe aus der Klemme gelöst werden, wobei der Rüssel als Hebel dienen kann. Das durch die Verschlußkappe sicher verschlossene Ölkännchen kann dann in beliebiger Stellung gelegt und transportiert werden. Nach Gebrauch wird beim Anbringen des Ölkännchens am Wandhalter auch die Verschlußkappe wieder in die Klemme eingerastet.

In bevorzugter praktischer Ausführung der Erfindung besteht die Klemme aus zwei am Wandhalter angeformten oder befestigten Klemmbacken, deren Abstand und Form so gewählt sind, daß die Verschlußkappe durch Bewegung quer zu ihrer Längsachse zwischen den Klemmbacken einschnappbar bzw. lösbar ist. Dabei erstrecken sich diese vorzugsweise im wesentlichen normal zur Befestigungsebene des Wandhalters, also im Falle eines hauptsächlich plattenförmigen Wandhalters normal zu Wand, so daß nicht nur das Ölkämmchen, sondern auch die Verschlußkappe durch eine Bewegung normal zur Wand am Wandhalter eingeschnappt und dadurch befestigt werden kann.

Wenn das Ölkännchen nur kurzzeitig, vorübergehend vom Wandhalter abgenommen wird und die Verschlußkappe weiter am Wandhalter festgeklemmt bleibt, soll sich nach Möglichkeit für das Abnehmen des Ölkännchens und dessen erneute Befestigung am Wandhalter dieselbe Situation ergeben wie bei der Ausführung mit Sackloch im Wandhalter. Zu diesem Zweck ist in weiterer bevorzugter Ausgestaltung der Erfindung vorgesehen, daß sich in der Tragstellung wenigstens neben dem einen axialen Ende der Verschlußkappe ein sie in der geklemmten Stellung gegen axiales Verschieben sichernder Anschlag angeordnet ist. Vorzugsweise halten zwei Anschläge die geklemmte Verschlußkappe in beiden Richtungen gegen axiales Verschieben. Dabei kann der eine Anschlag gleichzeitig auch eine Stützfläche für den Rüssel bilden. Der andere Anschlag hält die Verschlußkappe zweckmäßigerweise in einer solchen axialen Lage, daß sie in der Tragstellung des Ölkännchens axial fest auf die Rüsselspitze gedrückt ist.

Einen ganz besonders sicheren Verschluß der Öffnung in der Rüsselspitze erhält man dadurch, daß in der Tragstellung durch Materialelastizität des Ölkännchens oder des Wandhalters die Rüsselspitze mit der Öffnung axial gegen den Boden des Sacklochs bzw. der festgeklemmten Verschlußkappe angedrückt wird. Hierzu kann das weiterhin bevorzugte Merkmal beitragen, daß der Rüssel einen faltenbalgartig geformten Bereich aufweist, welcher nicht nur eine erwünschte Biegsamkeit des Rüssels, sondern auch dessen elastische Nachgiebigkeit in Längsrichtung gewährleistet.

Zwei Ausführungsbeispiele der Erfindung werden nachstehend anhand der Zeichnung näher erläutert. Es zeigen:

Fig. 1 eine Seitenansicht eines an einem Wandhalter befestigten Ölkännchens;

Fig 2 einen Teilschnitt nach Schnittlinie A - A in Fig. 1;

Fig 3 eine Draufsicht auf die Einheit von Ölkännchen und Wandhalter nach Fig. 1;

Fig 4 eine Ansicht von unten auf das am Wandhalter befestigte Ölkännchen;

Fig 5 einen Querschnitt durch den zur Aufnahme der Rüsselspitze des Ölkännchens bestimmten Bereichs des Wandhalters;

Fig 6 eine Seitenansicht eines an einem im Vergleich zu Fig. 1 abgewandelten Wandhalter befestigten Ölkännchens;

Fig 7 einen Teilschnitt nach Schnittlinie A - A nach Fig. 6;

Fig 8 einen Teilschnitt nach Schnittlinie B - B in Fig. 6 bei abgenommenem Ölkännchen;

Fig 9 eine Seitenansicht des die Rüsselspitze des Ölkännchens haltenden Bereichs des Wandhalters nach Fig. 6;

Fig 10 einen Teillängsschnitt gemäß Schnittlinie C - C in Fig. 6.

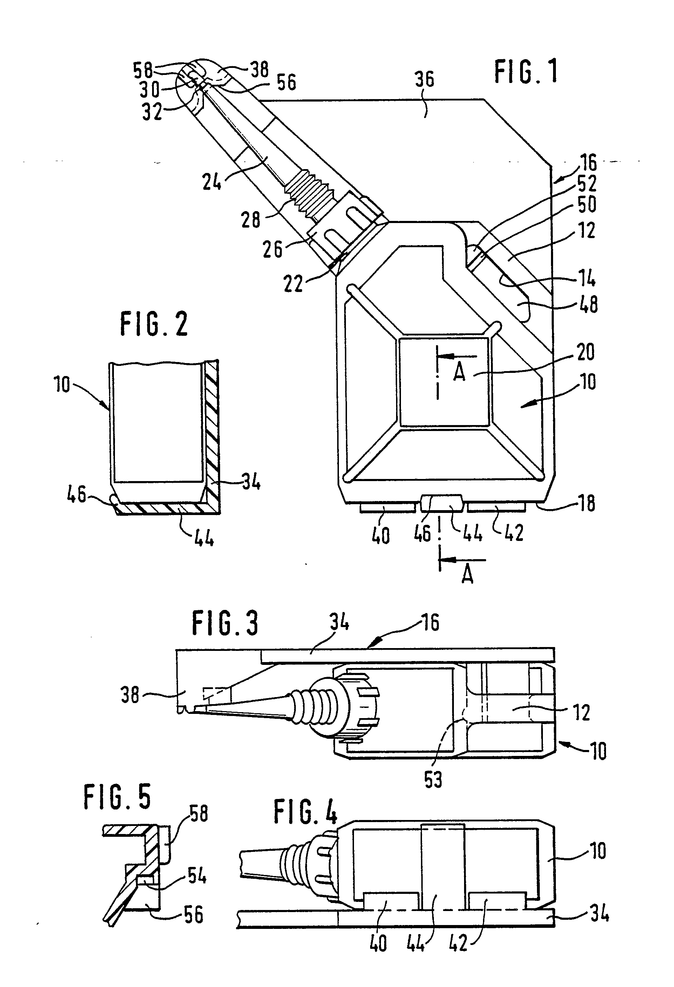

Das in der Zeichnung dargestellte, insgesamt mit 10 bezeichnete Ölkännchen hat im Kleinformat im wesentlichen die Form eines Öl kanisters, wie er zur Aufnahme von Motorenöl gebräuchlich ist. Die Breite des Ölkännchens 10 kann z. B. etwa 6 cm, die Höhe etwa 7,5 cm und die Tiefe etwa 2,5 cm betragen. Die beiden oberen Ecken sind abgeschrägt. Die mit Bezug auf Fig. 1 rechte, abgeschrägte Ecke hat die Form eines einstückig angeformten Handgriffs 12, der sich unter etwa 45° schräg zu den senkrechten Seitenflächen erstreckt. Selbstverständlich kann der Handgriff 12 im Kleinformat nicht als Handgriff dienen. Er begrenzt jedoch eine längliche Durchgriffsöffnung 14, die zur Befestigung des Ölkännchens 10 an einem passend zugeordneten Wandhalter 16 ausgenutzt werden kann.

Die im wesentlichen quaderförmige äußere Gestalt des Ölkännchens 10 mit einer ebenen Bodenfläche 18 eignet sich auch gut zur Aufstellung in aufrechter Lage. Außerdem bietet die ebene Vorderfläche Platz für ein Schriftfeld 20.

An der mit Bezug auf Fig. 1 linken oberen Ecke hat der Behälter des Ölkännchens 10 eine runde Öffnung in Form eines Rohrstutzens 22 mit Außengewinde. Darauf ist ein mit einer inneren Kanüle ausgebildeter Rüssel 24 mit einem passenden Innengewinde aufgeschraubt. Der Gewindeteil des Rüssels 24 kann insgesamt einstückig mit diesem ausgebildet sein. Im Beispielsfall findet jedoch stattdessen eine Überwurfmutter 26 Anwendung, mit der, wie auch sonst bei derartigen Verbindungen mit Überwurfmutter üblich, das innere Ende des Rüssels 24 fest und dicht gegen den Rohrstutzen 22 angezogen wird. Die vom Rüssel 24 getrennte Ausführung des Gewindeteils in Form der Überwurfmutter 26 bietet den Vorteil, daß diese aus einem andersfarbigen Kunststoff hergestellt werden kann als der Rüssel 24. Auch der Behälter des Ölkännchens 10 besteht vorzugsweise aus Kunststoff, und zwar beispielsweise aus einem derart transparenten Material, daß der Füllstand von außen sichtbar ist.

Bei der beispielhaft dargestellten Ausführung hat der Rüssel 24 nahe der Überwurfmutter 26 einen faltenbalgartig geformten Bereich 28, der die Biegsamkeit des Rüssels 24 verbessert und auch eine gewisse Elastizität des Rüssels in Längsrichtung gewährleistet.

Die Ölkännchen werden normalerweise mit Ölfüllung verkauft. In diesem Ausgangszustand ist das äußerste Ende 30 des Rüssels 24, welches durch eine Ringnut 32 markiert ist, dicht verschlossen. Bei Ingebrauchnahme wird das äußerste Ende 30 des Rüssels 24 an der Ringnut 32 abgeschnitten und dadurch die Kanüle des Rüssels geöffnet. Dieser ragt mit Bezug auf die senkrechten Seitenflächen des Behälters des Ölkännchens unter 45° nach oben, kann aber dank des faltenbalgartigen Bereichs 28 leicht in eine andere Richtung gebogen werden.

Der Wandhalter 16 besteht aus einer ebenen Grundplatte 34 aus Kunststoff, welche mit z. B. drei Schraubenlöchern geformt ist, mit deren Hilfe der Wandhalter an einer Wand angebracht werden kann. Mehrere an der Grundplatte 34 angeformte Vorsprünge dienen der Befestigung des Ölkännchens 10. Im unteren Bereich ist die äußere Kontur des Wandhalters 16 der Kontur des Ölkännchens angepaßt. Nach oben steht die Grundplatte 34 jedoch über das Ölkännchen 10 vor und bildet dort ein weiteres Schriftfeld 36. Gleichzeitig stabilisiert der nach oben überstehende Bereich 36 einen an der Rüsselspitze angreifenden Vorsprung 38.

Drei weitere Vorsprünge 40, 42 und 44 an der Unterkante des Wandhalters 16 bilden eine ebene Tragfläche, welche im aufgespannten Zustand die Bodenfläche 18 des Ölkännchens 10 unterstützt. Die flachen Vorsprünge 40 und 42 sind verhältnismäßig kurz, so daß sie äußerlich kaum in Erscheinung treten, nur der zwischen den beiden Vorsprüngen 40 und 42 angeordnete, ebenfalls flache und verhältnismäßig schmale Vorsprung 44 erstreckt sich über die gesamte Tiefe des Ölkännchens 10 und ist an seinem freien Ende mit einer aufwärts vorstehenden Nase 46 ausgebildet, welche die untere vordere Kante des Ölkännchens umgreift und dieses mit seiner Rückwand in Anlage an der Grundplatte 34 des Wandhalters 16 hält.

Ein weiterer Vorsprung 48 auf der Grundplatte 34 ist derart ausgebildet und angeordnet, daß er in die Durchgriffsöffnung 14 des Ölkännchens 10 paßt, wenn dieses in der vorgesehenen Stellung auf den Vorsprüngen 40, 42, 44 steht. Der Vorsprung 48 ist nahe seinem oberen Ende mit einem Querschlitz 50 versehen, der sich bis zur Grundplatte 34 erstreckt. Durch diesen Querschlitz 50 wird aus dem obersten Ende des Vorsprungs 48 eine Federzunge 52 gebildet, die mit einem in Fig. 3 gestrichelt gezeigten nasenförmigen Vorsprung 53 um die Vorderkante des Handgriffs 12 greift und dadurch ebenfalls das Ölkännchen 10 mit seiner Rückseite zuverlässig an der Grundplatte 34 hält.

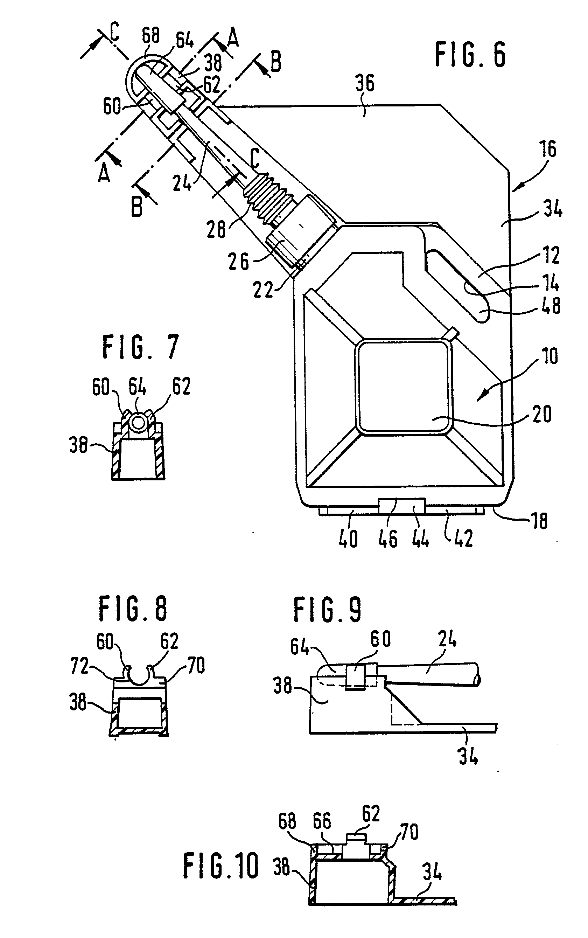

Der Vorsprung 38 ist, wie am besten aus Fig. 5 hervorgeht, mit einem Sackloch 54 ausgebildet, in welches nach dem Abschneiden des äußeren Endes 30 die nunmehr offene Spitze des Rüssels 24 einführbar ist. Die Maße des Sacklochs 54 und des Rüssels 24 sind so aufeinander abgestimmt, daß einerseits die Durchmesser zueinander passen und andererseits die Rüsselspitze durch Materialelastizität des Ölkännchens 10 und des Rüssels 24 mit seinem faltenbalgartigen Bereich 28 elastisch gegen den Grund des Sacklochs 54 angedrückt wird, während das Ölkännchen die in der Zeichnung gezeigte Stellung am Wandhalter 16 einnimmt, in welcher es durch die Vorsprünge 40, 42, 44 und 48, 52 sowie die Nasen 46 und 53 gehalten wird.

Axial vor dem Sackloch 54 ist der Vorsprung 38 mit einem trichterförmigen bzw. beidseitig mit Schrägflächen versehenen Einführbereich 56 ausgebildet, der das Einführen der Rüsselspitze in das Sackloch 54 erleichtert. Der Einführbereich 56 ist nicht nur axial, sondern auch seitlich nach vorn offen.

Solange das äußere Ende des Rüssels 24 noch nicht abgeschnitten ist, d. h. im verkaufsfertigen Zustand, wird der Rüssel 24 noch nicht durch das Sackloch 54 gehalten. Dies ist auch nicht notwendig, da die Kanüle im Rüssel 24 noch dicht verschlossen ist. In diesem Zustand liegt das Ende 30 des Rüssels 24 gegen eine Stützfläche am Vorsprung 38 auf der Außenseite des Sacklochs 54 an, wobei eine seitliche Abstützung des Rüsselendes 30 durch zwei Rippen 58 vorgesehen sein kann.

Die Ausführung nach Fig. 6 - 10 unterscheidet sich nur durch das Fehlen des Querschlitzes 50 und des Vorsprungs 53 sowie durch die Gestaltung des Wandhalters 16 und des Ölkännchens 10 im Bereich des Rüsselendes von der Ausführung nach Fig. 1 - 5.

Gemäß Fig. 6 - 10 bildet der Vorsprung 38 gegenüber der Grundplatte 34 eine Erhebung, auf welcher zwei Klemmbacken 60, 62 angeformt sind. Ihr Abstand ist so gewählt, daß die auf dem Rüssel 24 sitzende Verschlußkappe 30 zwischen den mit einer Hinterschneidung versehenen Klemmbacken eingeschnappt werden kann, wie dies aus Fig. 6, 7 und 9 ersichtlich ist.

Um eine von Anfang an lösbar auf dem offenen Ende des Rüssels 24 sitzende Verschlußkappe 64 gegen axiale Verschiebung zu sichern, ist die Endwand des Vorsprungs 38 über eine in Fig. 10 mit 66 bezeichnete Auflagefläche der Verschlußkappe 64 nach oben hochgezogen und bildet dadurch einen äußeren Anschlag 68. In ähnlicher Weise ist auf der anderen Seite der Verschlußkappe 64 ein weiterer Anschlag 70 nach oben über die Auflagefläche 66 hochgezogen, welcher mit einer Auskehlung 72 ausgebildet ist, die eine Stützfläche für den Rüssel darstellt. Wenn beim Abnehmen des Ölkännchens 10 vom Wandhalter 16 der Rüssel 24 aus der weiterhin geklemmt gehaltenen Verschlußkappe 64 gezogen wird, verhindert der Anschlag 70, daß die Verschlußkappe 64 axial aus der Klemme 60, 62 herausgezogen wird. Wenn dann anschließend bei der erneuten Anbringung des Ölkännchens am Wandhalter der Rüssel 24 wieder in die Verschlußkappe 64 eingeführt wird, verhindert der Anschlag 68, daß die Verschlußkappe 64 axial ausweicht. Der Anschlag 68 ist in einer solchen Stellung angeordnet, daß in der in Fig. 6 gezeigten Tragstellung die Verschlußkappe 64 verhältnismäßig fest und damit dicht auf die Spitze des Rüssels 24 gedrückt ist.

Wenn das Ölkännchen 10 zusammen mit der Verschlußkappe 64 vom Wandhalter 16 abgenommen werden soll, wird zunächst auch wieder durch Lösen der Nase 46 der Behälter des Ölkännchens gelockert und aus dem Eingriff mit dem Vorsprung 48 gelöst. Dann wird jedoch nicht der Rüssel 24 in axialer Richtung aus der Verschlußkappe gezogen, sondern der Behälter des Ölkännchens wird weiter von der Grundplatte 24 abgehoben und zweckmäßigerweise gleichzeitig mit den Fingern unter den elastisch biegsamen Rüssel 24 gegriffen. Dadurch kann die Verschlußkappe 64 aus der Klemme 60, 62 herausgehebelt werden. Daneben besteht selbstverständlich auch die Möglichkeit, durch Untergreifen des Rüssels 24 erst die Verschlußkappe 64 aus der Klemme 60, 62 zu ziehen und danach durch Zurückdrücken der Nase 46 den Behälter des Ölkännchens vom Wandhalter zu lösen.

Insgesamt bietet das neue Ölkännchen mit Wandhalter nach Fig. 6 - 10 somit erstmals die Möglichkeit, eine Verschlußkappe wahlweise unverlierbar am Wandhalter zu lassen, um mit einem einzigen Handgriff sofort das schon geöffnete Ölkännchen einsetzen zu können, oder die Verschlußkappe 64 zusammen mit dem Ölkännchen vom Wandhalter abzunehmen, wenn es auch im abgenommenen Zustand verschlossen gehalten werden soll.

**Ansprüche**

1. An einem Wandhalter in einer bestimmten Tragstellung befestigbares Ölkännchen mit einem elastisch biegsamen Rüssel, **dadurch gekennzeichnet,** daß am Wandhalter (16) an derjenigen Stelle (bei 38), wo sich in der Tragstellung des Ölkännchen (10) die Rüsselspitze (24) befindet, eine Verschlußkappe (38, 54; 64) angebracht ist, welche die Rüsselspitze (24) des Ölkännchens (10) verschließt und aus welcher die Rüsselspitze (24) beim Abnehmen des Ölkännchens (10) vom Wandhalter (16) herausziehbar ist.

2. Ölkännchen mit Wandhalter nach Anspruch 1, **dadurch gekennzeichnet,** daß die Verschlußkappe durch ein Sackloch (54) im Wandhalter (16) gebildet ist.

3. Ölkännchen mit Wandhalter nach Anspruch 2, **dadurch gekennzeichnet,** daß sich an die Öffnung des Sacklochs (54) ein im wesentlichen trichterförmiger Einführbereich (56) anschließt, welcher auf derjenigen Seite, von welcher das Ölkännchen (10) zum Befestigen an den Wandhalter (16) herangeführt wird, offen ist.

4. Ölkännchen mit Wandhalter nach Anspruch 1, **dadurch gekennzeichnet,** daß der Wand halter (26) an derjenigen Stelle (bei 38), wo sich in der Tragstellung des Ölkännchens (10) die Rüsselspitze (24) befindet, eine Klemme (60, 62) aufweist, welche eine auf die Rüsselspitze (24) aufsetzbare Verschlußkappe (64) kraftschlüssig, aber lösbar hält.

5. Ölkännchen mit Wandhalter nach Anspruch 1, **dadurch gekennzeichnet,** daß der Rüssel (24) einen faltenbalgartig geformten Bereich (28) aufweist.

6. Ölkännchen mit Wandhalter nach Anspruch 1, **dadurch gekennzeichnet,** daß das Ölkännchen (10) im Kleinformat die Form eines den Rüssel (24) schräg nach oben streckenden, in Seitenansicht im wesentlichen viereckigen Ölkanisters mit einem einstückig ausgebildeten Handgriff (12) und einer Durchgriffsöffnung (14) hat, in welche der Wandhalter (16) mit einem Vorsprung (48, 52, 53) eingreift.

7. Ölkännchen mit Wandhalter nach Anspruch 6, **dadurch gekennzeichnet,** daß der Wandhalter (16) mit wenigstens einer das Ölkännchen (10) im unteren Bereich abstützenden Tragfläche (40, 42, 44) ausgebildet ist, welche eine den unteren Rand des Ölkännchens (10) umgreifende Nase (46) aufweist, wobei die Tragfläche (40, 42, 44) im Bereich der Nase (46) an einem in Richtung von deren Spitze federnden Vorsprung (44) ausgebildet ist.

8. Ölkännchen mit Wandhalter nach Anspruch 4, **da durch gekennzeichnet,** daß die Klemme aus zwei am Wandhalter (16) angebrachten Klemmbacken (60, 62) besteht, deren Abstand und Form so gewählt sind, daß die Verschlußkappe (64) durch Bewegung quer zu ihrer Längsachse zwischen den Klemmbacken einschnappbar bzw. lösbar ist.

9. Ölkännchen mit Wandhalter nach Anspruch 8, **dadurch gekennzeichnet,** daß sich in der Tragstellung wenigstens neben dem einen axialen Ende der Verschlußkappe (64) ein sie in der geklemmten Stellung gegen axiales Verschieben sichernder Anschlag (68, 70) befindet.

10. Ölkännchen mit Wandhalter nach Anspruch 9, **dadurch gekennzeichnet,** daß ein gegen axiales Verschieben sichernder Anschlag (68) die Verschlußkappe (64) in einer solchen axialen Lage hält, daß sie in der Tragstellung des Ölkännchens (10) axial fest auf die Rüsselspitze (24) gedrückt ist.

FIG. 1

FIG. 2

FIG. 3

FIG. 5

FIG. 4

FIG. 6

FIG. 7

FIG. 8

FIG. 9

FIG. 10